# EUROPEAN PATENT SPECIFICATION

(11) **EP 0 882 618 B1**
(45) Date of publication and mention of the grant of the patent: **03.09.2003**
(21) Application number: 98109302.4
(22) Date of filing: 22.05.1998
(51) Int. Cl.: B60K 26/02, B60K 17/10, F15B 1/00, B60K 41/16

(54) **Automatic transmission for hydraulic drive vehicles**
Automatisches Getriebe für hydrostatisch-angetriebene Fahrzeuge
Transmission automatique pour véhicules à entraînement hydrostatique

(30) Priority: 02.06.1997 IT MI971291
(43) Date of publication of application: 09.12.1998
(73) Proprietor: Gansow Elektrobau GmbH, 26861 Fombio (LO) (IT)
(72) Inventor: Liscio, Michele, 20146 Milano (IT)
(74) Representative: Marietti, Giuseppe

(56) References cited:
- DE-A- 2 103 095
- DE-A- 2 250 567

## Description

The present invention relates to an automatic transmission for hydraulic traction vehicles comprising a hydraulic engine which activates at least one driving wheel of a vehicle, a variable flow pump to regulate the flow of a pressurised fluid from an inlet to an outlet of the pump, a delivery tube to send the fluid from the pump outlet to the hydraulic engine, a return tube to send the fluid from the engine to the pump inlet, a mobile control rod connected at one end to the pump, an accelerator connected to the other end of the mobile rod, the accelerator activating the rod between a first position where the pump has a first flowrate and a second position where the pump has a second flowrate, these flows corresponding to different speeds of the vehicle.

It is known that hydraulic transmissions are used for traction in small vehicles such as road sweepers, floor-washer-drier machines and lift trucks.

Basically, such vehicles are fitted with an electric motor or internal combustion engine which serves to deliver a fluid under high pressure. This pressurised fluid is delivered through a tube to a variable flow pump which sends the fluid, through a pipe, to a hydraulic engine which activates the driving wheels of the vehicle. The fluid returns to the pump through a second pipe. The mobile element in the pump which regulates the flow is moved by means of a mechanism by an accelerator which is activated by the driver. The accelerator is usually a pedal of the kind used in cars. An automatic transmission according to the preamble of claim 1 is known from DE 210 305 5 A.

However, these types of transmissions have certain drawbaks.

When the driver has to drive uphill, he instinctively presses the pedal to the floor. This action causes an increase in speed of the vehicle, but not in the torque since the maximum speed does not correspond to the maximum torque, and therefore the vehicle will have difficulty going uphill. This problem can be solved by installing a more powerful transmission. This solution is obviously not advantageous from an economic viewpoint since the final cost of the vehicle will be high.

Furthermore, this type of transmission creates another problem. When, from a total standstill, the driver sets off accelerating to the maximum, the sudden increase in speed causes the vehicle to swerve dangerously. This also causes the driving wheels to skid and therefore increases wear on these wheels. Moreover, in electrical traction vehicles, the sudden demand for power results in high electrical consumption and this means that the battery goes flat prematurely. Accordingly, the charge-discharge cycles become more frequent and this shortens battery life.

It is therefore an object of this invention to provide an automatic transmission which allows to solve all the above problems.

Such problems can be solved using an automatic transmission for hydraulic traction vehicles according to claim 1.

The advantages of the present invention will be evident from a reading of the following description of an embodiment thereof which is shown in the following drawings, wherein:
figure 1 is a simplified diagram giving a full view of an automatic transmission for hydraulic traction vehicles,
figure 2 shows in cross-section an enlarged detail of fig. 1.

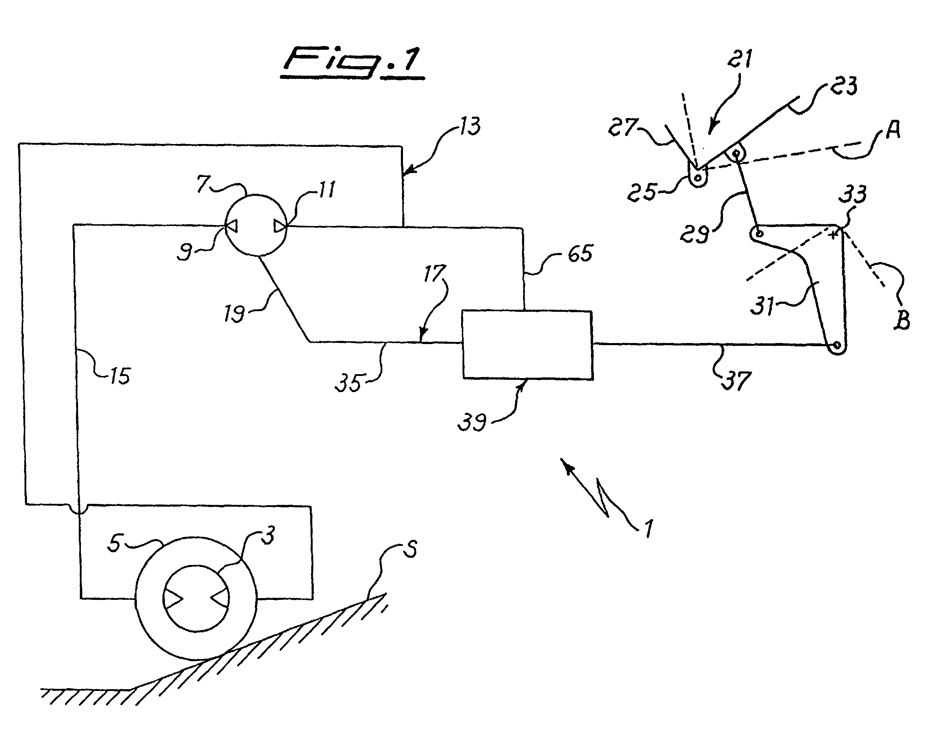

First refer to fig 1. Number 1 indicates the automatic transmission for hydraulic traction vehicles which is the object of the present invention.

It comprises a hydraulic engine 3 which activates a driving wheel 5 of a vehicle, not illustrated here. The wheel has been illustrated driving uphill S. A variable flow pump 7 is foreseen to regulate the flow of a pressurised fluid, which can be an oil, between an inlet 9 and an outlet 11 of said pump. The fluid is pressurized by means of an electric motor or an internal combustion engine which operates the pump as well known. These parts are not described since they are irrelevant to the invention.

The transmission comprises a delivery tube 13 to send the fluid from the pump outlet 11 to the hydraulic engine 3 in order to activate it, and a return tube 15 to send the fluid from the engine to the pump inlet 9.

Moreover, a mobile control rod 17 is connected at one end to a lever 19 which in turn is connected to the pump 7 in order to regulate the flowrate of said pump. There is also an accelerator 21, which has the same overall form as the accelerator pedal of a car. Therefore, it comprises a part 23 which is fashioned in such a manner as to rotate around a point 25 and upon which the foot of the driver rests. However, it differs from a traditional pedal in that it has another part 27 whose function will be described below. The pedal 21 is connected to the other end of the control rod 17 by means of a mechanism which consists of a tie rod 29 one end of which pivots on the part 23 of the pedal and the other end of which is connected to a of leg a L shaped lever 31. The lever 31 can rotate around a point 33.

The other leg of lever 31 is connected to the free end of the control rod 17. The pedal serves to move the control rod between a first position, on the right in fig.1, which corresponds to the maximum flowrate of the pump and therefore the maximum speed, and a second position, on the left in fig.1, which consequently corresponds to the minimum flowrate of the pump and the minimum speed of the vehicle.

The control rod is of variable length and the transmission comprises means 39 in order to modify its dimension.

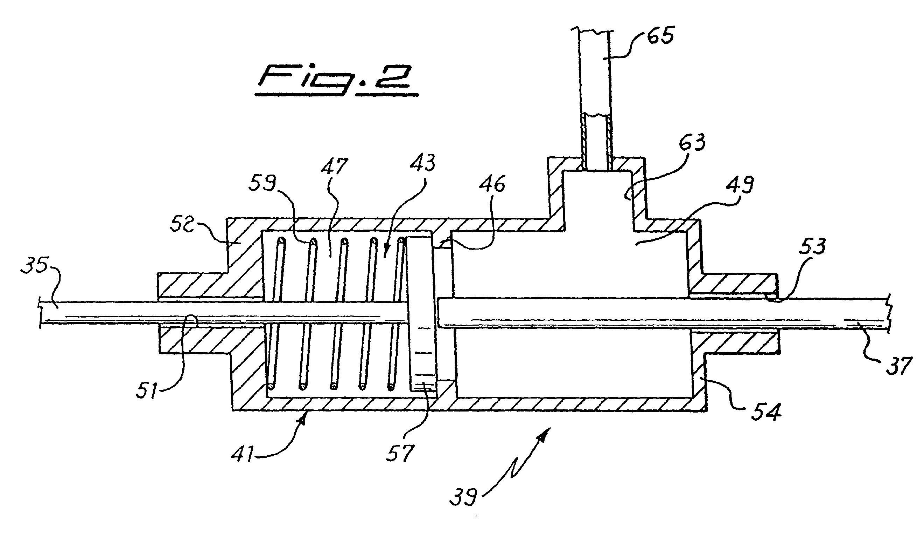

Referring now to fig. 2 for a detailed examination of the rod and means 39, the rod is composed of a torque rod 35, one end of which is connected to a lever 19 of the pump, and a speed rod 37 connected at one end to the lever 31 and having its free end normally in contact with the free end of the torque rod 35. Obviously the two rods are aligned.

The means 39 for modifying the length of the push rod 17 comprise of a body 41 which is cylindrical in shape and inside of which a cavity 43 is provided for. The cavity 43 communicates with the outside by means of two openings 51, 53 respectively in the two bases 52 and 54 of the cylindrical body 41. The free ends of the torque rod 35 and speed rod 37 respectively are slidingly housed within the the openings.

The free end of rod 35 terminates in a piston 57 which creates a pushing chamber 47 in the cavity between the piston and the first opening 51 and a pressure chamber 49 between the piston and the second opening 53.

In the pushing chamber 47 a helical spring 59 is housed, which pushes the piston against the free end of the speed rod 37.

Another opening 63 is foreseen along the circumference wall of the cylindrical body 41 which allows the pressure chamber 49 to communicate with an offtake tube 65 connected in turn to the delivery tube 13. The pressure chamber is therefore filled with the hydraulic transmission fluid.

The inner wall of the cavity 43 has a ledge 46 around the circumference acting as a stop to limit the movement of the piston 57 under the force of the spring 59.

With reference to figures 1 and 2, the operation of the transmission will be now described.

Supposing that the driver gradually presses the pedal 21 to the floor in order to travel at maximum speed. The pedal therefore passes from the position indicated by the unbroken line to the position A indicated by the dotted line shaped lever by the dotted line. Due to this action, the L shaped lever 19, thanks to the push of the tie rod 29, will move from the position indicated by the unbroken line to that indicated by the dotted line B. In turn, the lever 19 draws the speed rod 37 to the right.

Under these conditions, the force exerted by the fluid in the pressure chamber 49 on piston 61 is lower than the force exerted by the spring 59 on the same piston and, therefore the torque rod 35 will move to the right in order to "follow" the speed rod 37. The movement to the right of the torque rod 35 will cause an increase in the flowrate of the pump 7 and therefore an increase in speed of the engine 3 and vehicle. Under these conditions, the stroke of the piston 57 under the thrust of the spring will be blocked by the stop 46 to prevent it pushing the speed rod to the right against the driver's will. This situation could arise as a result of a drop in pressure within the chamber 49 caused for example by a fluid leakage.

Should the driver wish to reverse the travel direction, he presses the part 27 of the pedal downwards. In this way, the speed rod 37 moves to the left, pushing the torque rod 35 completely to the left. The torque rod therefore causes the pump to operate in reverse condition so that the delivery tube 13 acts as return back and the return tube 15 acts as delivery tube for the fluid. Thus, the hydraulic engine 3 turns in reverse direction and the vehicle moves backwards.

Finally, considering the case where the driver wishes to drive uphill S and presses the part 23 of the accelerator to the floor, as has already been noted, maximum velocity does not correspond to maximum torque and, therefore the vehicle is unable to go uphill. Nonetheless, in this case, there is an increase in pressure in the delivery tube 13. This increase in pressure also occurs in tube 65 and in the pressure chamber 49 since it is connected to the delivery tube 13. The pressure increase in this situation is so great that the force of the fluid on piston 57 is now able to exceed that of the spring 59. The spring is then forced to compress and allow the torque rod 35 to move slightly to the left. The torque rod 35 in turn moves the lever 19 in such a way as to create conditions wherein the flow in the pump is decreased but the pressure is higher (and therefore there is a greater torque) than under the preceding conditions. Therefore the vehicle is able to drive uphill.

Therefore a transmission has been realized which is essentially automatic since it reduces speed while driving uphill in favour of an increase in torque without any need for intervention of the driver.

The automatic transmission comes into action also if the vehicle sets off from a complete standstill, since in this situation there is an increase in the fluid pressure causing the lengthening of the push rod and obliging the pump to operate with an lower flow but superior torque, avoiding skidding or poor wheel grip.

With this automatic transmission, the push rod 17 acts as a rod made of a single piece where the vehicle is in normal operating conditions: driving at moderate speed, maximum speed, in reverse direction, etc. However, as soon as anomalous operating conditions arise: driving uphill, sudden acceleration, the rod "breaks" into the two component rods, the speed rod and the torque rod, which move independently, and then works as a single element again as soon as operating conditions return to normal.

Note that this result is obtained by means of a transmission composed of simple reliable elements which guarantee safe transmission operation.

Said automatic transmission may be realized in a different manner. For example, the tube 65 may be replaced by a pressure sensor located on the tube 13. Moreover, a solenoid can be formed by the body 41 made of ferromagnetic material and around which is placed a coil which is excited by a control from the sensor, while the part of the torque rod 35 contained in the body acts as nucleus. Normally, the torque rod 35 is pushed by the spring 59 against the speed rod 37. When the sensor detects that a predetermined pressure value has been reached, it sends a signal which excites the solenoid and obliges the torque rod 35 to move to the left away from the speed rod 37.

## Claims

1. An automatic transmission (1) for hydraulic traction vehicles comprising:
- a hydraulic engine (3) activating at least one driving wheel of a vehicle,
- a variable flow pump (7) to regulate the flowrate of a pressurised fluid from an inlet (9) to an outlet (11) of the pump,
- a delivery tube (13) to send the fluid from the pump outlet (11) to the hydraulic engine (3),
- a return tube (15) to send the fluid from the engine (3) to the pump inlet (9),
- a mobile control rod (17) connected at one end to the pump (7) to regulate the fluid flowrate,
- an accelerator (21) connected to the other end of the control rod (17), the accelerator (21) activating the rod (17) between a first position where the pump (7) has a first flow and a second position where the pump has a second flow,
the control rod (17) is of variable length from a minimum to a maximum dimension,
and moreover it includes:
- means (39) to modify the length of the control rod (17), **characterised in that** said means (39) are activated by the reaching of a predetermined pressure in the delivery tube (13), in order to alter the length of the control rod (17) from its minimum to its maximum dimension or vice versa when the rod is in the first position or in the second position to change the flowrate in the pump (7).

2. An automatic transmission (1) according to claim 1, **characterized in that** said rod (17) comprises:
- a torque rod (35) connected at one end to the pump (7),
- a speed rod (37) connected at one end to the accelerator (21), and **in that** said modifying means (39) comprise:
a pressure chamber (49) defined between the free ends of the speed and torque rods (37, 35), said pressure chamber being in fluidic communication with the pump delivery tube (13),
- elastic means (59) to push the torque rod (35) against the speed rod (37).

3. An automatic transmission (1) according to claim 2 **characterized in that** the free end of said torque rod (35) is fitted with a piston (57).

4. An automatic transmission (1) according to claim 2 **characterized in that** said elastic means (59) are a spring (59)

5. An automatic transmission (1) according to claim 2, **characterized in that** stop means (46) are provided to block the movement of the speed rod (37).

## Patentansprüche

1. Automatische Kraftübertragung (1) für hydraulisch angetriebene Fahrzeuge, enthaltend:
- einen Hydromotor (3), der wenigstens ein Antriebsrad eines Fahrzeugs betätigt.
- eine volumenstromveränderbare Pumpe (7) zur Regelung des Volumenstromes eines unter Druck stehenden Fluides zwischen einem Einlass (9) und einem Auslass (11) der Pumpe.
- eine Förderleitung (13) zur Förderung des Fluides von dem Punpenauslass (11) zu dem Hydromotor (3).
- eine Rücklaufleitung (15) zur Förderung des Fluides von dem Motor (3) zu dem Pumpeneinlass (9).
- eine bewegliche Regelstange (17), die an einem Ende mit der Pumpe (7) verbunden ist, zur Regulierung des Volumenstromes des Fluides.
- ein Fahrpedal (21), das mit dem anderen Ende der Regelstange (17) verbunden ist, wobei das Fahrpedal (21) die Regelstange (17) zwischen einer ersten Stellung, bei der die Pumpe (7) einen ersten Volumenstrom hat, und einer zweiten Stellung, bei der die Pumpe einen zweiten Volumenstrom hat, betätigt. wobei die Regelstange (17) eine von einer minimalen bis zu einer maximalen Erstreckung veränderliche Länge aufweist,
und weiterhin enthält:
- eine Einrichtung (39) zur Veränderung der Länge der Regelstange (17).
**dadurch gekennzeichnet, dass** die Einrichtung (39) betätigt wird durch Erreichen eines vorbestimmten Druckes in der Förderleitung (13), um die Länge der Regelstange (17) von ihrer minimalen Erstreckung auf ihre maximale Erstreckung oder umgekehrt zu ändern, wenn sich die Regelstange in der ersten Stellung oder der zweiten Stellung befindet. um den Volumenstrom in der Pumpe (7) zu ändern.

2. Automatische Kraftübertragung (1) nach Anspruch 1. **dadurch gekennzeichnet, dass** die Stange (17) umfasst:
- ein Momentengestänge (35), das an einem Ende mit der Pumpe (7) verbunden ist,
- ein Geschwindigkeitsgestänge (37), das an einem Ende mit dem Fahrpedal (21) verbunden ist,
und **dass** die Einrichtung (39) enthält:
eine Druckkammer (49), die zwischen den freien Enden der Momentenund Geschwindigkeitsgestänge (35, 37) gebildet ist, wobei die Druckkammer in Fliessverbindung mit der Pumpenförderleitung (13) steht,
- eine elastische Einrichtung (59). um das Momentengestänge (35) gegen das Geschwindigkeitsgestänge (37) zu drücken.

3. Automatische Kraftübertragung (1) nach Anspruch 2, **dadurch gekennzeichnet, dass** das freie Ende des Momentengestänges (35) mit einem Kolben (57) versehen ist.

4. Automatische Kraftübertragung (1) nach Anspruch 2, **dadurch gekennzeichnet, dass** die elastische Einrichtung (59) eine Feder (59) ist.

5. Automatische Kraftübertragung (1) nach Anspruch 2, **dadurch gekennzeichnet, dass** eine Stoppeinrichtung (46) vorgesehen ist, um die Bewegung des Geschwindigkeitsgestänges (37) zu blockieren.

## Revendications

1. Transmission automatique (1) pour véhicules à entraînement hydrostatique comprenant :
- un moteur hydraulique (3) actionnant au moins une roue motrice d'un véhicule,
- une pompe à débit variable (7) régulant le débit d'un fluide sous pression entre un orifice d'entrée (9) et un orifice de sortie (11) de la pompe,
- une tuyauterie de sortie (13) envoyant le fluide de l'orifice de sortie de la pompe (11) au moteur hydraulique (3),
- une tuyauterie de retour (15) envoyant le fluide du moteur (3) à l'orifice d'entrée de la pompe (9),
- une tige de commande mobile (17) connectée à l'une de ses extrémités à la pompe (7) pour réguler le débit du fluide,
- un accélérateur (21) connecté à l'autre extrémité de la tige de commande (17), l'accélérateur (21) actionnant la tige (17) entre une première position où la pompe (7) présente un premier débit et une seconde position où la pompe présente un second débit,
la tige de commande (17) est de longueur variable entre une dimension minimale et une dimension maximale,
elle comprend en outre :
- des moyens (39) permettant de modifier la longueur de la tige de commande (17), **caractérisée en ce que** lesdits moyens (39) sont activés par l'obtention d'une pression prédéterminée dans la tuyauterie de sortie (13) afin de modifier la longueur de la tige de commande (17) entre ses dimensions minimale et maximale ou inversement lorsque la tige est à la première position ou à la seconde position afin de modifier le débit de la pompe (7).

2. Transmission automatique (1) selon la revendication 1, **caractérisée en ce que** ladite tige (17) comprend :
- une tige de torsion (35) connectée à une extrémité de la pompe (7),
- une tige d'entraînement (37) connectée à une extrémité de l'accélérateur (21) et **en ce que** lesdits moyens de changement (39), comprennent :
- une chambre à pression (49) définie entre les extrémités libres de la tige d'entraînement et de la tige de torsion (37, 35), ladite chambre à pression étant en communication fluidique avec la tuyauterie de sortie de la pompe (13),
- des moyens élastiques (59) poussant la tige de torsion (35) contre la tige d'entraînement (37).

3. Transmission automatique (1) selon la revendication 2, **caractérisée en ce que** l'extrémité libre de ladite tige de torsion (35) est équipée d'un piston (57).

4. Transmission automatique (1) selon la revendication 2, **caractérisée en ce que** lesdits moyens élastique (59) sont un ressort (59)

5. Transmission automatique (1) selon la revendication 2, **caractérisée en ce que** des moyens d'arrêt (46) sont prévus pour bloquer le mouvement de la tige d'entraînement (37).
